# EUROPEAN PATENT APPLICATION

(11) **EP 3 530 958 A1**
(43) Date of publication of application: **28.08.2019**
(21) Application number: 17862837.6
(22) Date of filing: 16.10.2017
(51) Int. Cl.: F04D 29/38, B29C 43/20, B64C 1/00, F02C 7/00, B29K 101/12, B29K 105/08

(54) **FAN ROTOR BLADE AND METHOD OF MANUFACTURING SAME**

(30) Priority: 18.10.2016 JP 2016204392
(71) Applicant: IHI Corporation, Tokyo 135-8710 (JP); Japan Aerospace Exploration Agency, Tokyo 182-8522 (JP)
(72) Inventor: KUROKI, Hiroshi, Tokyo 135-8710 (JP); HOJO, Masahiro, Chofu-shi Tokyo 182-8522 (JP)
(74) Representative: MERH-IP Matias Erny Reichl Hoffmann Patentanwälte PartG mbB
(86) International application number: PCT/JP2017/037393
(87) International publication number: WO 2018/074423

(57) **Abstract**

A fan rotor blade comprises an outer covering member and a metal core body. The outer covering member is made of a composite material including a thermoplastic resin and reinforcing fibers. The outer covering member has a shape of a blade surface having a positive pressure surface and a negative pressure surface. The metal core body is arranged between the positive pressure surface and the negative pressure surface. The metal core body has a hollow structure.

## Description

### Technical Field

The present disclosure relates to a fan rotor blade and a method of manufacturing the same.

### Background Art

Fan rotor blades using fiber reinforced plastics (FRPs) have been conventionally developed and various methods of reducing the weight of the fan rotor blades have been studied. For example, Patent Literature 1 discloses a method of manufacturing a blower blade, the method comprising: placing a preform lower body on a split mold; then setting a hollow body or a lightweight core material thereon; then covering the upper surface thereof with a preform upper body; and closing an upper mold and injecting a thermosetting plastic into the mold and curing the plastic, thereby to integrally adhesively bond a peripheral edge portion in which the preform upper body is in contact with the preform lower body.

### Citation List

### Patent Literature

Patent Literature 1 Japanese Unexamined Patent Publication No. H7-1607

### Summary of Invention

### Technical Problem

Recent years have seen a demand for reducing weight of fan rotor blades for use in an aircraft engine and the like. In the method disclosed in Patent Literature 1, however, a contact portion between the preform upper body and the preform lower body is bonded with a thermosetting plastic different from that of the preform upper body and the preform lower body, leading to a possibility that a strength at the contact portion cannot be sufficiently obtained.

The present disclosure describes a fan rotor blade capable of being suitably used in an aircraft engine and the like, the fan rotor blade achieving weight reduction while sufficiently securing mechanical strength, and a method of manufacturing the same.

### Solution to Problem

A fan rotor blade according to an aspect of the present disclosure comprises: an outer covering member made of a composite material including a thermoplastic resin and reinforcing fibers, the outer covering member having a shape of a blade surface having a positive pressure surface and a negative pressure surface; and a metal core body arranged between the positive pressure surface and the negative pressure surface, the metal core body having a hollow structure.

### Effects of Invention

The present disclosure can provide a fan rotor blade capable of being suitably used in an aircraft engine and the like, the fan rotor blade achieving weight reduction while sufficiently securing mechanical strength, and a method of manufacturing the same.

### Brief Description of Drawings

Figure 1 is a front view illustrating a fan rotor blade according to an embodiment of the present disclosure.
Figure 2 is a side view illustrating the fan rotor blade according to the embodiment of the present disclosure.
Figure 3 is a top view illustrating the fan rotor blade according to the embodiment of the present disclosure.
Figure 4 is a cross-sectional view illustrating a cross section taken along line IV-IV of Figure 1.
Figure 5 is a schematic view for describing a method of manufacturing the fan rotor blade according to the embodiment of the present disclosure.
Figure 6 is a schematic view for describing the fan rotor blade according to the embodiment of the present disclosure.

### Description of Embodiments

A fan rotor blade according to an aspect of the present disclosure comprises: an outer covering member made of a composite material including a thermoplastic resin and reinforcing fibers, the outer covering member having a shape of a blade surface having a positive pressure surface and a negative pressure surface; and a metal core body arranged between the positive pressure surface and the negative pressure surface, the metal core body having a hollow structure.

In this fan rotor blade, the outer covering member made of a composite material has a shape of a blade surface having a positive pressure surface and a negative pressure surface. Therefore, an excellent mechanical strength can be obtained as compared with a case in which the positive pressure surface and the negative pressure surface are made of different members. Further, in this fan rotor blade, the metal core body having a hollow structure is arranged between the positive pressure surface and the negative pressure surface, and the entire weight reduction is achieved by the metal core body. Furthermore, heating is required to mold the composite material including the thermoplastic resin, but in this fan rotor blade, the core body having a hollow structure is made of metal, which prevents deformation due to heating during molding. For this reason, deformation of the blade surface shape, reduction in mechanical strength, and the like due to deformation of the core body are sufficiently prevented.

In an aspect, the hollow structure may be a structure selected from a honeycomb structure, a lattice structure, and a foam structure. In this case, the pressure resistance of the metal core body is improved. Thus, a higher pressure can be applied when molding the outer covering member and the outer covering member can have a finer blade surface shape.

In an aspect, a part of the thermoplastic resin constituting the outer covering member may be penetrated into the hollow structure of the metal core body. The method disclosed in Patent Literature 1 has a problem that a bonding strength between the lightweight core material and the preform upper and lower surface bodies cannot be sufficiently secured. In contrast to this, in the present aspect, the thermoplastic resin penetrated into the hollow structure improves the bonding strength between the outer covering member and the metal core body, and thus the fan rotor blade has a more excellent mechanical strength.

A method of manufacturing a fan rotor blade according to an aspect of the present disclosure comprises: a first molding step of obtaining a preform by laminating and integrating a plurality of composite sheets including a thermoplastic resin and reinforcing fibers; and a second molding step of overlapping a plurality of preforms with a metal core body having a hollow structure, the metal core body being interposed therebetween, and integrating the preforms by heating and pressurizing.

In this manufacturing method, the outer covering member having a blade surface shape is integrally molded from the preform molded from a composite sheet including a thermoplastic resin and reinforcing fibers. Further, the metal core body is placed inside the outer covering member by overlapping the plurality of preforms with the metal core body interposed therebetween. Therefore, according to the above manufacturing method, the above described fan rotor blade having an excellent mechanical strength can be easily manufactured.

In an aspect, the hollow structure may be a structure selected from a honeycomb structure, a lattice structure, and a foam structure. In this case, the metal core body has a good pressure resistance, and thus can be pressurized by a higher pressure in the second molding step. Therefore, the fan rotor blade having a finer blade surface shape can be manufactured.

Hereinafter, a preferred embodiment of the present disclosure will be described with reference to the accompanying drawings. Note that in the description of the drawings, the same reference numerals or characters are assigned to the same components, and the duplicate description is omitted. Note that some drawings are exaggeratedly drawn for ease of understanding, and the dimensional ratios and the like are not limited to those illustrated in the drawings.

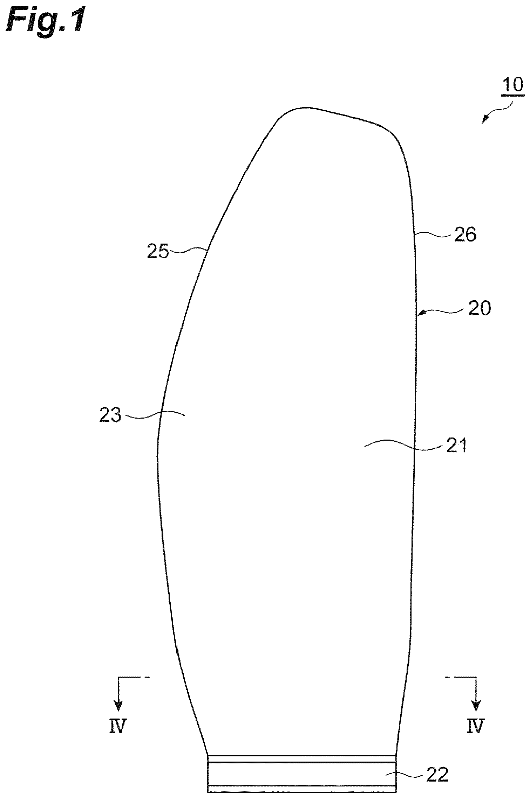

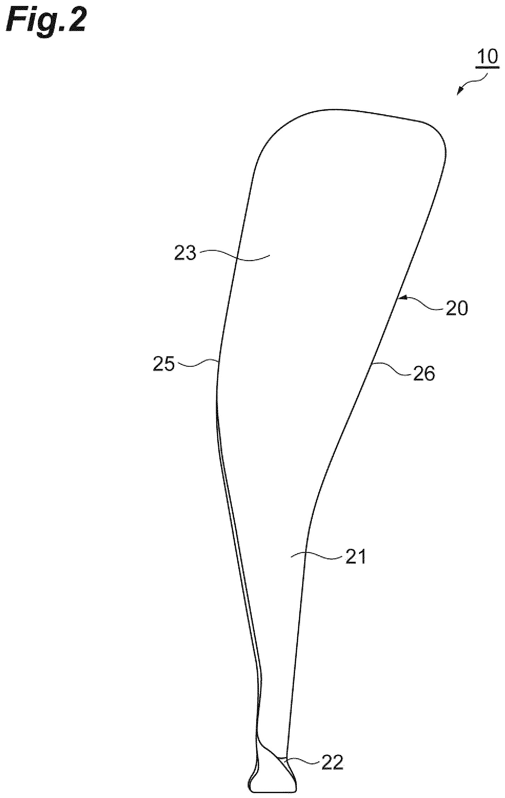

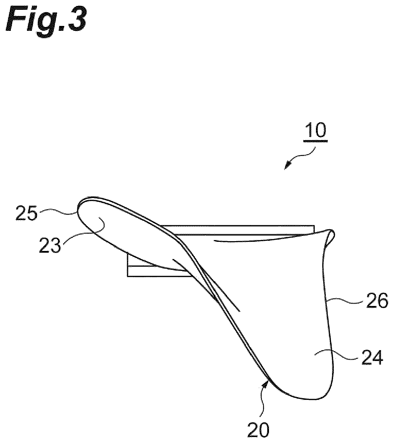

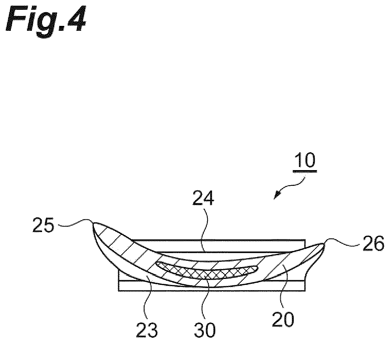

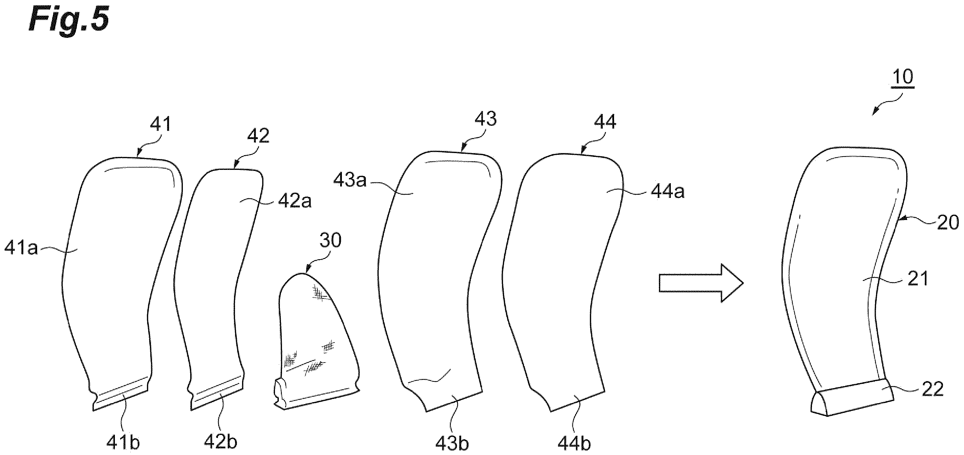

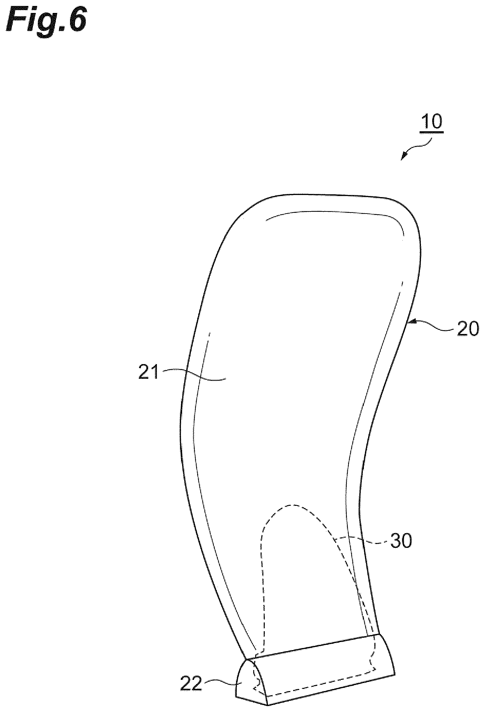

Figure 1 is a front view illustrating a fan rotor blade according to an embodiment of the present disclosure. Figure 2 is a side view illustrating the fan rotor blade according to the embodiment of the present disclosure. Figure 3 is a top view illustrating the fan rotor blade according to the embodiment of the present disclosure. Further, Figure 4 is a cross-sectional view illustrating a cross section taken along line IV-IV of Figure 1. Further, Figure 5 is a schematic view for describing a method of manufacturing the fan rotor blade according to the embodiment of the present disclosure. Figure 6 is a schematic view for describing the fan rotor blade according to the embodiment of the present disclosure.

As illustrated in Figures 1 to 4, a fan rotor blade 10 according to the present embodiment comprises an outer covering member 20 and a metal core body 30 covered with the outer covering member 20. Further, the fan rotor blade 10 comprises a blade portion 21 having a blade surface shape and a support portion 22 extending to a blade root end of the blade portion 21. The blade portion 21 and the support portion 22 are integrally molded by the outer covering member 20. The blade surface shape of the blade portion 21 is defined by a leading edge 25, a trailing edge 26, a positive pressure surface 23 which is a side surface on the front side in the rotational direction extending from the leading edge 25 to the trailing edge 26, and a negative pressure surface 24 which is a side surface on the rear side in the rotational direction extending from the leading edge 25 to the trailing edge 26. In order to fix the fan rotor blade 10 to a support body (unillustrated) such as a fan disk, the support portion 22 has a shape to fit in a mounting groove of the support body.

The outer covering member 20 is made of a composite material including a thermoplastic resin and reinforcing fibers. The type of the thermoplastic resin is not particularly limited, but may be appropriately selected from well-known engineering plastics, super engineering plastics, and the like according to characteristics such as strength and toughness required for the fan rotor blade 10. Preferred examples of the thermoplastic resin include polyether imide (PEI), polyether ether ketone (PEEK), and polyether ketone ketone (PEKK). The composite material may contain one kind of thermoplastic resin or may contain two or more thermoplastic resins. The type of the reinforcing fibers is also not particularly limited, but may be appropriately selected from well-known reinforcing fibers according to characteristics such as strength and toughness required for the fan rotor blade 10. Preferred examples of the reinforcing fibers include carbon fibers, aramid fibers, and glass fibers.

The outer covering member 20 is formed by further integrally molding the preforms 41 to 44 formed by laminating and integrating a plurality of composite sheets including a thermoplastic resin and reinforcing fibers to be described later. Examples of the composite sheet may be a composite sheet made of reinforcing fibers impregnated with a thermoplastic resin or reinforcing fibers distributed in a thermoplastic resin. Examples of the composite sheet include a unidirectional prepreg obtained by impregnating a thermoplastic resin into reinforcing fibers aligned in one direction. Further, the composite sheet may be a woven fabric prepreg obtained by impregnating a thermoplastic resin into reinforcing fibers for woven fabrics such as plain weaves, twill weaves, and satin weaves.

The metal core body 30 has a hollow structure. The hollow structure of the metal core body 30 may be designed in such a way as the weight of the metal core body 30 is smaller than that of an equal volume of composite material. In other words, the metal core body 30 may have a specific gravity smaller than that of the composite material. Examples of the specific gravity of the metal core body 30 may be 0.2 to 1.5, and may be higher than the density of a fiber reinforced plastic (FRP) for reinforcement of rigidity and strength. Further, examples of the porosity of the metal core body 30 may be 5 to 40%, and may be 40% or more and less than 100%. The porosity of 100% corresponds to a case in which the metal core body is removed after manufacturing of the blade.

The metal core body 30 may have a hollow structure, for example, selected from a honeycomb structure, a lattice structure, and a foam structure. In this case, the pressure resistance of the metal core body is improved. Thus, a higher pressure can be applied when molding the outer covering member and the outer covering member can have a finer blade surface shape. The honeycomb structure is a structure in which solid figures are arranged without a gap, and may have a structure, for example, obtained by arranging regular hexagonal prisms without a gap. The lattice structure is also referred to as a grid structure. Examples of the lattice shape in the lattice structure may include a simple lattice structure (cubic structure), an orthogonal lattice structure, a body-centered cubic lattice structure, a diamond lattice structure, and the like. The lattice spacing and the lattice thickness in the lattice structure may be appropriately changed according to the desired specific gravity. Examples of the lattice spacing in the lattice structure may be 2 to 3 mm, and may be 3 to 10 mm. Examples of the lattice thickness in the lattice structure may be 0.4 to 1.0 mm. The foam structure may be an open cell structure or a closed cell structure. The metal material constituting the metal core body 30 is not particularly limited, and the examples thereof may include a titanium alloy, a nickel alloy, a stainless alloy, and the like.

The metal core body 30 is disposed on the blade root end of the fan rotor blade 10. Further, in the fan rotor blade 10, the metal core body 30 constitutes a part of an inner structure on the blade root end side of the blade portion 21 and a part of an inner structure of the support portion 22. The outer shape of the metal core body 30 may be any shape as long as the mechanical strength of the fan rotor blade 10 is secured by the outer covering member 20. The blade root end side of the blade portion 21 and the support portion 22 are relatively thick portions in the fan rotor blade 10, and thus the metal core body 30 disposed in these inner structures can have a larger outer shape.

In an aspect, a part of the thermoplastic resin constituting the outer covering member 20 may be penetrated into the hollow structure of the metal core body 30. The thermoplastic resin penetrated into the hollow structure of the metal core body 30 is integrated with the composite material of the outer covering member 20, which can improve the bonding strength between the metal core body 30 and the outer covering member by an anchor effect.

In the fan rotor blade 10, the outer covering member 20 made of a composite material has a shape of a blade surface having the positive pressure surface 23 and the negative pressure surface 24. Therefore, an excellent mechanical strength can be obtained as compared with a case in which the positive pressure surface 23 and the negative pressure surface 24 are made of different members. Further, in this fan rotor blade 10, the metal core body 30 having a hollow structure is arranged between the positive pressure surface 23 and the negative pressure surface 24, and the entire weight reduction is achieved by the metal core body 30. Furthermore, heating is required to mold the composite material including the thermoplastic resin, but in this fan rotor blade 10, the core body having a hollow structure is made of metal, which prevents deformation due to heating during molding. For this reason, deformation of the blade surface shape, reduction in mechanical strength, and the like due to deformation of the core body are sufficiently prevented.

Then, the method of manufacturing the fan rotor blade 10 according to the present embodiment will be described with reference to Figure 5.

The manufacturing method according to the present embodiment comprises a first molding step of obtaining a preform by laminating and integrating a plurality of composite sheets; and a second molding step of overlapping the plurality of preforms with the metal core body 30 interposed therebetween and integrating the preforms by heating and pressurizing.

In the first molding step, for example, a preform 41 is molded by laminating and integrating the composite sheets. The preform 41 comprises a first mold portion 41a for forming the blade portion 21; and a second mold portion 41b for forming the support portion 22 extending to the blade root end of the first mold portion 41a.

Examples of the first molding step may be a step of forming the preform 41 by heating and pressurizing a laminated body obtained by laminating a plurality of composite sheets. The laminated body is formed by laminating a predetermined number of composite sheets each having a predetermined size at a predetermined position corresponding to the thickness and the three-dimensional shape of the preform 41 to be formed. Then, the laminated body is placed, for example, in a mold and the mold is pressurized at a predetermined pressure while being heated to a predetermined temperature, thereby to form the preform 41. The heating temperature may be any temperature as long as the temperature allows a plurality of composite sheets to be integrally molded, and, for example, may be a temperature equal to or greater than the softening point of the thermoplastic resin. The pressure for pressurization may be any pressure as long as the pressure allows a plurality of composite sheets to be integrally molded, and, for example may be 1 to 15 MPa.

In the first molding step, the preforms 42, 43, and 44 may be separately molded. The preforms 42, 43, and 44 are molded in the same manner as the preform 41. Further, the preforms 42, 43, and 44 comprise the first mold portions 42a, 43a, and 44a for forming the blade portion 21; and the second mold portions 42b, 43b, and 44b for forming the support portion 22 respectively in the same manner as the preform 41.

The preforms 41, 42, 43, and 44 may have curved surface shapes formed when the outer covering member 20 of the fan rotor blade 10 is divided into a plurality of pieces in the thickness direction. Further, the preforms 41 and 44 disposed outside in the second molding step may have curved surface shapes corresponding to the negative pressure surface 24 and the positive pressure surface 23 of the fan rotor blade 10 respectively.

In the second molding step, the plurality of preforms 41, 42, 43, and 44 are integrated by being overlapped with the metal core body 30 interposed therebetween and by being heated and pressurized. The preforms 41, 42, 43, and 44 are arranged in this order, and the metal core body 30 is interposed between the preforms 42 and 43.

In the second molding step, the fan rotor blade 10 is formed, for example, by overlapping the preforms 41, 42, 43, and 44 with the metal core body 30 interposed therebetween, placing them in a mold, and pressurizing the mold at a predetermined pressure while heating the mold to a predetermined temperature. At this time, the thermoplastic resin of each of the preforms 41, 42, 43, and 44 is softened and melted at each interface between the preforms, thereby to form an integrated outer covering member 20. Further, the blade portion 21 is formed of the first mold portions 41a, 42a, 43a, and 44a of the preforms 41, 42, 43, and 44 with the metal core body 30 interposed therebetween; and the support portion 2 is formed of the second mold portions 41b, 42b, 43b, and 44b of the preforms 41, 42, 43, and 44, with the metal core body 30 interposed therebetween.

In the second molding step, the heating temperature may be any temperature as long as the temperature allows the plurality of preforms 41, 42, 43, and 44 to be integrally molded, and, for example, may be a temperature equal to or greater than the softening point of the thermoplastic resin. The pressure for pressurization may be any pressure as long as the pressure allows the plurality of preforms 41, 42, 43, and 44 to be integrally molded, and, for example, may be 1 to 30 MPa.

In the second molding step, the heating and pressurizing conditions may be adjusted in such a way as the thermoplastic resin of the preforms 42 and 43 directly contacting the metal core body 30 may be penetrated into the hollow structure of the metal core body 30. Thereby, there is formed a structure in which a part of the thermoplastic resin of the outer covering member 20 penetrates into the hollow structure of the metal core body 30. Note that an increase in heating temperature and pressurizing pressure increases the filling amount of the thermoplastic resin filled into the hollow structure of the metal core body 30.

In the manufacturing method according to the present embodiment, the outer covering member 20 having a blade surface shape is integrally formed of the preforms 41, 42, 43, and 44 each formed of a composite material prepreg including a thermoplastic resin and reinforcing fibers. Further, the metal core body 30 is placed inside the outer covering member 20 by overlapping the plurality of preforms 41, 42, 43, and 44 with the metal core body 30 interposed therebetween. Therefore, the above manufacturing method can easily manufacture the fan rotor blade 10 having an excellent mechanical strength.

Hereinabove, a preferred embodiment of the present disclosure has been described, but the present disclosure is not limited to the above embodiment.

### Industrial Applicability

According to the present disclosure, a fan rotor blade achieving weight reduction while sufficiently securing mechanical strength can be obtained and the fan rotor blade can be suitably used in an aircraft engine and the like.

### Reference Signs List

- 10: fan rotor blade
- 20: outer covering member
- 21: blade portion
- 22: support portion
- 23: positive pressure surface
- 24: negative pressure surface
- 25: leading edge
- 26: trailing edge
- 30: metal core body
- 41 to 44: preform

## Claims

1. A fan rotor blade comprising:
an outer covering member made of a composite material including a thermoplastic resin and reinforcing fibers, the outer covering member having a shape of a blade surface having a positive pressure surface and a negative pressure surface; and
a metal core body arranged between the positive pressure surface and the negative pressure surface, the metal core body having a hollow structure.

2. The fan rotor blade according to claim 1, wherein the hollow structure is selected from a honeycomb structure, a lattice structure, and a foam structure.

3. The fan rotor blade according to claim 1, wherein a part of the thermoplastic resin constituting the outer covering member penetrates into the hollow structure of the metal core body.

4. The fan rotor blade according to claim 2, wherein a part of the thermoplastic resin constituting the outer covering member penetrates into the hollow structure of the metal core body.

5. A method of manufacturing a fan rotor blade, the method comprising:
a first molding step of obtaining a preform by laminating and integrating a plurality of composite sheets including a thermoplastic resin and reinforcing fibers, the preform comprising a plurality of preforms; and
a second molding step of overlapping the plurality of preforms with a metal core body having a hollow structure, the metal core body being interposed therebetween, and integrating the preforms by heating and pressurizing.

6. The method of manufacturing the fan rotor blade according to claim 5, wherein the hollow structure is selected from a honeycomb structure, a lattice structure, and a foam structure.
